Europäisches Patentamt

(19) European Patent Office

Office européen des brevets

(11) Numéro de publication : **0 441 694 A1**

## (12) DEMANDE DE BREVET EUROPEEN

(21) Numéro de dépôt : 91400265.4

(22) Date de dépôt : 05.02.91

(51) Int. Cl.⁵ : **B32B 27/20, B65D 65/40**

(30) Priorité : 06.02.90 FR 9001358

(43) Date de publication de la demande :
14.08.91 Bulletin 91/33

(84) Etats contractants désignés :
AT BE CH DE DK ES GB GR IT LI LU NL SE

(71) Demandeur : USIPLAST
Chemin de Montataire
F-60530 Neuilly en Thelle (FR)

(72) Inventeur : Brenneisen, Jean-Pierre
10, avenue des Pages
F-78110 Le Vesinet (FR)

(74) Mandataire : Daudens, Michèle
Groupe ARJOMARI 3, rue du Pont de Lodi
F-75006 Paris (FR)

(54) **Nouvelle feuille de matière synthétique opaque et contenant réalisé à partir de cette feuille.**

(57)    L'invention concerne une feuille de matière synthétique opaque en transmission.
    Elle est constituée d'au moins trois couches (8,9,10) de matière synthétique superposées, la couche interne (8) étant constituée d'une matière synthétique comportant un moyen opacifiant et les couches externes (9,10) étant sensiblement transparentes à la lumière. La couche interne(8) comprend comme moyen opacifiant un moyen choisi parmi les charges opacifiantes, les colorants, les pigments.
    Application à l'emballage.

Fig. 2

EP 0 441 694 A1

# NOUVELLE FEUILLE DE MATIERE SYNTHETIOUE OPAQUE ET CONTENANT REALISE A PARTIR DE CETTE FEUILLE

La présente invention concerne une nouvelle feuille de matière synthétique et plus particulièrement une feuille opaque à la lumière transmise. Par feuille, on entend ci-après une feuille ou un film d'épaisseur supérieure à 50 micromètres.

On connait déjà des feuilles et films de matière synthétique qui sont de préférence imprimables par tous procédés d'impression, par exemple par sérigraphie, flexographie, offset. Ces feuilles peuvent être rigides ou plus ou moins flexibles en raison de leur épaisseur plus ou moins importante et de leur composition. Ces feuilles ou films réalisés en matière plastique sont très souvent colorés dans la masse. Pour effectuer cette coloration on utilise des pigments ou des colorants qui confèrent à la feuille ou au film une opacité plus ou moins prononcée selon la composition chimique du pigment ou du colorant et selon la teinte finale souhaitée. Cependant, les feuilles ou films ainsi colorés sont destinés à être imprimés non seulement sur la face recto mais aussi sur la face verso. Or en général ces feuilles ou films colorés manquent d'opacité, ce qui a pour conséquence que, lorsque l'on imprime une face, l'impression se voit par transparence sur la face opposée.

De plus, lorsque ces feuilles ou films sont utilisés pour fabriquer par exemple des contenants tels que des classeurs ou malettes, boites etc, ils sont en contact avec des objets ou documents comportant une impression et/ou écriture. La transparence des feuilles ou films laisse apparaître l'impression et/ou l'écriture des objets ou documents contenus, ce qui confère un aspect peu esthétique et un caractère non confidentiel à l'ensemble.

On a donc cherché à compenser le manque d'opacité des feuilles ou films en matière plastique en augmentant la concentration de pigments ou de colorants dans la composition de matière plastique. Cependant, l'augmentation de la concentration pigmentaire présente de nombreux inconvénients. Un premier inconvénient est l'augmentation du prix de revient de telles feuilles ou films du fait de la proportion élevée de matières colorantes. De plus, l'augmentation de la concentration des matières colorantes (pigments ou colorants) ne permet pas d'obtenir dans la majorité des cas une opacité parfaite, c'est-à-dire la non transmission de la lumière au travers de la feuille ou du film. Un troisième inconvénient est que l'augmentation de la proportion de matières colorantes dans la composition peut modifier les caractéristiques mécaniques de la feuille et plus particulièrement peut diminuer notablement la résistance à la rupture de la feuille. Un quatrième inconvénient peut être la diminution des caractéristiques d'imprimabilité de la feuille du film du fait de la quantité importante des matières colorantes.

On connait aussi les documents suivants : EP-A-321 843, déposé par HOECHST (1), EP-A-180 087, déposé par HOECHST (2), EP-A-228 041, déposé par GENERAL ELECTRIC (3), US-A-4 048 736, déposé par PACKAGE PRODUCTS (4), EP-A-143 567, déposé par BCL (5) et GB-A-1 575 801, déposé par AUSTIN SOPARIL (6).

Le document (1) revendique une feuille à plusieurs couches, polyoléfinique, opaque, coextrudée et orientée par étirage biaxial constituée d'une couche centrale opaque et de deux couches de revêtement transparentes, caractérisée par le fait que la couche centrale est constituée essentiellement d'un mélange de

1) 45 à 90 % en poids d'un polymère thermoplastique à base de propylène,

2) 5 à 25 % en poids d'une charge inerte sous forme de particules,

3) 5 à 30 % en poids d'une résine hydrocarbonée compatible avec le polymère thermoplastique avec un point de ramollissement dans le domaine de 100 à 160 °C, les pourcentages étant donnés par rapport au poids total du mélange.

De telles feuilles sont utilisées comme papier synthétique.

Ce brevet décrit donc l'opacification de feuille de polypropylène par une couche centrale contenant des charges.

Le document (2) revendique une feuille polyoléfinique opaque, coextrudée et étirée biaxialement, ayant une densité inférieure à 0,9 g/m$^3$, qui est formée d'une feuille support polyoléfinique opaque contenant une charge, la feuille support comportant des deux cotés des couches de revêtement polyoléfiniques (D,E) transparentes ou vitreuses, caractérisée par le fait que la feuille support, pour l'amélioration des propriétés mécaniques est constituée de trois couches, une couche interne (A) et deux couches intermédiaires (B,C), que la couhe interne (A) ou les couches intermédiaires (B,C) de la feuille de support contiennent la charge et que la couche (ou les couches) sans charge de la feuille support est (ou sont) constituée (s) d'une polyoléfine modifiée avec une résine synthétique ou naturelle ayant un point de ramollissement de 70 à 180°C.

Ce brevet décrit donc aussi le fait de rendre opaque une feuille polyoléfinique à l'aide d'une feuille centrale contenant des charges.

De plus, dans la description de l'art antérieur de ce brevet on mentionne le brevet américain n° 4 377 616 déposé par MOBIL OIL (correspondant EP 83495) comme décrivant déjà une feuille polyoléfinique opaque, étirée biaxialement et obtenue par coextrusion, cette feuille étant constituée d'une feuille support opaque et de deux feuille externes transparentes ou vitreuses. La feuille support est constituée de polyoléfine et de charges. Son opacité résulte du fait de la teneur en charge et de l'étirage biaxial, il se créé une grande quantité de microtrous. La lumière venant frapper ces microtrous est déviée, ce qui créé l'opacité. Ces feuilles sont utilisables comme emballage pour l'alimentation.

Ces documents décrivent des fims peu épais qui sont étirés biaxialement et qui comportent des charges qui créent des microtrous.

Le document (3) déposé par GENERAL ELECTRIC décrit un matériau thermoplastique contenant des quantités importantes de colorant ou d'agents de renforcement. Cependant, un inconvénient de ce matériau thermoplastique est que le colorant est susceptible de migrer à la surface, et il peut alors entraîner des réactions postérieures avec des revêtements ou des encres déposés postérieurement en provoquant des changements de couleur indésirables. De plus, les agents de renforcement tels que des fibres de verre peuvent percer la surface du matériau et provoquer des lignes d'abrasion, et autres imperfections qui peuvent provoquer des défauts mécaniques. Pour résoudre ces problèmes, le document décrit un matériau constitué d'une couche centrale thermoplastique comprenant à l'état dispersé des constituants organiques et/ou minéraux et coextrudé avec des couches externes ne comprenant pas de constituants dispersés organiques ou minéraux.

La présente invention a donc pour but de fournir une feuille ou un film en matière synthétique, coloré dans la masse et ne présentant pas les inconvénients mentionnés ci-dessus.

Un premier but de l'invention est donc de fournir une feuille ou une plaque ou un film de matière synthétique, plus particulièrement de matière thermoplastique, qui soit parfaitement opaque, c'est-à-dire qui ne transmette absolument pas la lumière visible.

Un deuxième but de l'invention est de fournir une feuille de matière plastique qui tout en étant opaque, ne comporte pas une quantité importante de colorants et/ou de pigments.

Un troisième but de l'invention est de fournir une feuille de matière synthétique qui, tout en étant opaque, a une bonne résistance à la rupture.

Enfin un dernier but de l'invention est de fournir une feuille de matière synthétique, qui tout en étant opaque est facile à fabriquer et à imprimer, et dont le prix de revient est proche du prix des feuilles de la technique antérieure.

A cet effet, l'invention concerne une feuille ou film ou plaque de matière synthétique opaque en transmission caractérisée par le fait qu'elle est constituée de trois couches de matière synthétique superposées, la couche interne étant constituée d'une matière synthétique comportant un moyen opacifiant et les couches externes étant sensiblement transparentes à la lumière transmise.

Selon un mode de réalisation de l'invention, la couche interne comprend comme moyen opacifiant une charge opacifiante, un colorant ou un pigment.

Préférentiellement le moyen opacifiant est choisi parmi les charges telles que le noir de carbone, la craie, le talc, le mica, le kaolin.

Plus préférentiellement, le moyen opacifiant est constitué par un colorant ou un pigment opaque de couleur la plus proche de celle du colorant ou du pigment introduit dans les couches externes pour leur conférer leur coloration ; l'opacité de la couche interne peut être intrinsèque ou due à l'addition d'une charge opacifiante. La couche interne peut aussi avoir une couleur différente des couches externes.

Par exemple, l'épaisseur de la couche interne pourra être de 5 % à 80 % de l'épaisseur totale de la feuille ou plaque finie, mais de préférence de 10 % à 40 %.

Selon un mode de réalisation préféré de l'invention, l'épaisseur de la couche interne sera par exemple de 1/10 mm et l'épaisseur de chaque couche externe sera de 4/10 mm

L'épaisseur de la feuille ou du film fini peut par exemple être comprise entre 50 et 2000 micromètres, de préférence entre 50 et 1200 micromètres.

On peut par exemple colorer les couches externes dans la masse selon la teinte choisie (ou selon deux teintes différentes si on le souhaite) et on peut réaliser la couche interne de la manière suivante :

. la composition comporte une matière minérale rendant opaque la couche interne

. la composition comporte un colorant ou un pigment opaque, par exemple du noir de carbone. Mais on peut aussi choisir une autre couleur opaque, par exemple une couleur noire, marron, grise, etc.

Cependant les proportions de matière opacifiante dépendent de l'aspect souhaité de la tranche, de l'épaisseur totale du produit réalisé et de la teinte extérieure finale souhaitée pour la feuille finie.

En effet, si la couche interne est proportionnellement beaucoup plus épaisse que les couches externes, la teinte extérieure finale de la feuille sera modifiée du fait de la transparence des couches externes et de l'opacité de la couche centrale.

De même, l'aspect de la tranche dépendra de l'épaisseur relative de la couche interne.

Par opacité, on entend dans la présente description le fait qu'aucune lumière arrivant sur la feuille n'est transmise à travers la feuille. Par transparence on entend dans la présente description, le fait que lorque la lumière arrive, une certaine quantité de lumière est transmise à travers la feuille.

Le procédé de fabrication de la feuille ou film ou plaque est un procédé connu en lui même. Il peut s'agir d'un procédé de contrecollage de la feuille interne avec les deux feuilles externes, mais de préférence on réalise la feuille ou film ou plaque selon l'invention par procédé de coextrusion. Par exemple on réalisera la coextrusion à l'aide d'un dispositif de coextrusion à plat qui consiste à faire pénétrer plusieurs flux de matière synthétique de compositions différentes que l'on fait pénétrer en amont d'une filière d'extrusion. Un tel dispositif de coextrusion peut par exemple être un dispositif tel que décrit dans les brevets US 4 152 387, US 4 533 308, US 4 600 550.

La description suivante en regard des dessins annexés et des exemples ci-dessous permettra de comprendre comment l'invention peut être mise en pratique.

La figure 1 est une vue en coupe d'une feuille de matière synthétique de la technique antérieure.

La figure 2 est une vue en coupe d'une feuille de matière synthétique selon l'invention.

La figure 3 est une vue en perspective de la feuille de la figure 1 qui comporte une impression.

La figure 4 est une vue en perspective de la feuille de la figure 3 selon l'invention et comportant une impression.

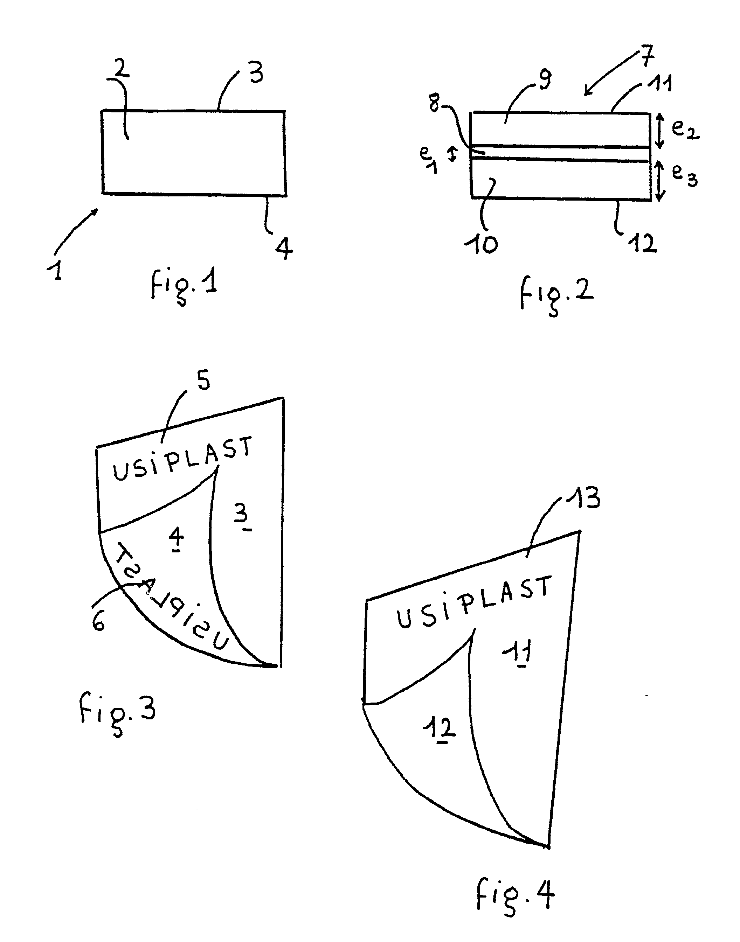

La feuille 1 représentée en coupe sur la figure 1 est constituée d'une matière synthétique, par exemple une matière thermoplastique telle que du polypropylène, du polyéthylène, du polystyrène, du polytéréphtalate, ou autres matières polymères ou leurs mélanges.

Cette feuille est de préférence imprimable, par exemple par sérigraphie, flexographie, ou impression offset. Cette feuille est par exemple de couleur et à cet effet on a rajouté à la matière synthétique de base un prémélange de matière synthétique et d'un pigment solide ou un colorant. Pour former la feuille, on utilise de manière connue un dispositif d'extrusion. Pour que la feuille soit imprimable on lui fait subir de manière connue un traitement Corona ou on couche la feuille à l'aide d'une composition de couchage connue ou tout autre traitement de surface adaptée ou sa composition lui confère le caractère d'imprimabilité.

Comme on peut le voir sur la figure 1, cette feuille est constituée d'une couche unique (2). Cette feuille a une face recto (3) et une face verso (4). Si on imprime sur la face recto (3), par exemple le mot "USIPLAST" (5), cette impression est lisible par transparence sur la face verso et on peut voir l'impression en caractères inversés (6). On comprend aisément que la transparence de cette feuille peut constituer un inconvénient sérieux. En effet, si on utilise la feuille par exemple pour réaliser un classeur ou un sac à main ou une mallette, si on imprime au recto, cette impression sera visible par transmission au verso et nuira à l'esthétique de l'objet. Il en sera de même si on imprime la feuille recto-verso.

La feuille (7) selon l'invention représentée en coupe sur la figure 2 ne présente pas ces inconvénients. En effet, elle est constituée d'au moins une couche interne (8) et d'au moins deux couches externes (9,10), la couche interne étant constituée d'une matière synthétique comportant un moyen opacifiant et les couches externes étant sensiblement transparentes à la lumière transmise. Cependant l'ensemble est opaque en lumière transmise. Ainsi lorsqu'on imprime sur la face recto (11), par exemple le mot "USIPLAST" (13), ce mot n'apparait pas en transparence sur la face verso (12), puisque la feuille selon l'invention est parfaitement opaque.

Selon un mode de réalisation préféré de l'invention, l'épaisseur de la couche interne sera par exemple de 1/10 mm et l'épaisseur de chaque couche externe sera de 4/10 mm.

## EXEMPLE COMPARATIF.

On fabrique par extrusion une feuille de polypropylène de 1 mm d'épaisseur. Cette feuille a une coloration blanche qui lui est conférée par addition dans le polypropylène d'un mélange maître à 3% d'un colorant blanc. Cette feuille n'est pas opaque et laisse passer la lumière par transparence.

## EXEMPLE 1.

On fabrique par coextrusion une feuille de polypropylène de 1 mm d'épaisseur. Cette feuille est constituée d'une couche interne de 1/10 de mm qui est opacifiante qui contient de 3 % à 5 % en poids de craie, de 1 % à 5 % de $T_i O_2$ et de deux couches externes de 4/10 mm chacune, de même composition que la feuille de l'exemple comparatif. Cette feuille est complètement opaque et ne laisse absolument pas passer la lumière par transmission.

## EXEMPLE 2.

On fabrique par coextrusion une feuille de polypropylène de 1 mm d'épaisseur. Cette feuille est constituée d'une couche interne de 1/10 de mm qui est opacifiante et qui contient 3% à 5% de noir de carbone de 1 % à 5 % de $T_i O_2$ et de deux couches externes de 4/10 mm chacune, de même composition que la feuille de l'exemple comparatif. Cette feuille est complètement opaque et ne laisse absolument pas passer la lumière par transmission.

## Revendications

1. Feuille de matière synthétique opaque en transmission, caractérisée par le fait qu'elle est constituée d'au moins trois couches (8,9,10) de matière synthétique superposées, la couche interne (8) étant constituée d'une matière synthétique comportant un moyen opacifiant et les couches externes (9,10) étant sensiblement transparentes à la lumière.

2. Feuille selon la revendication 1, caractérisée par le fait que la couche interne(8) comprend comme moyen opacifiant un moyen choisi parmi les charges pacifiantes, les colorants, les pigments.

3. Feuille selon l'une des revendications 1 et 2, caractérisée par le fait que le moyen opacifiant est une charge choisie parmi le noir de carbone, la craie, le talc, le mica, le kaolin.

4. Feuille selon l'une des revendications précédentes, caractérisée par le fait que le moyen opacifiant est constitué par un colorant ou un pigment opaque de couleur la plus proche de celle du colorant ou du pigment introduit dans les couches externes pour leur conférer leur coloration.

5. Feuille selon l'une des revendications précédentes, caractérisée par le fait que l'épaisseur de la couche interne (8) est comprise entre 5 % et 80 % environ de l'épaisseur totale de la feuille, de préférence entre 10 % et 40 % environ.

6. Feuille selon l'une des revendications précédentes, caractérisée par le fait que son épaisseur est supérieure à 50 micromètres.

7. Feuille selon l'une des revendications précédentes, caractérisée par le fait qu'elle est constituée d'une matière thermoplastique choisie dans le groupe formé par le polypropylène, le polyéthylène, le polystyrène, le polytéréphtalate et leurs mélanges.

8. Contenant réalisé au moyen d'au moins une feuille selon l'une des revendications 1 à 7.

fig.1

fig.2

fig.3

USiPLAST

fig.4

USiPLAST

Office européen
des brevets

**RAPPORT DE RECHERCHE EUROPEENNE**

Numero de la demande

EP    91 40 0265

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-321843 (HOECHST AKT.)<br>* le document en entier * | 1, 2, 5-7 | B32B27/20<br>B65D65/40 |
| X | EP-A-180087 (HOECHST AKT.)<br>* page 11, lignes 5 - 11; revendications 1, 6, 7 * | 1, 2, 5-7 | |
| A | EP-A-228041 (GENERAL ELECTRIC COMPANY)<br>* page 1, ligne 9 - page 2, ligne 22 *<br>* page 4, lignes 22 - 27 * | 1-8 | |
| A | US-A-4048736 (CASTLEMAN ET AL.)<br>* colonne 2, lignes 25 - 29 *<br>* colonne 3, lignes 15 - 28 *<br>* colonne 4, lignes 6 - 12 *<br>* colonne 4, ligne 65 - colonne 5, ligne 39 *<br>* colonne 5, ligne 60 - colonne 6, ligne 29 *<br>* figures 1, 2 * | 1-8 | |
| A· | EP-A-143567 (BCL LIMITED)<br>* page 2, ligne 8 - page 4, ligne 14 *<br>* page 5, lignes 4 - 10 *<br>* page 5, lignes 22 - 24 * | 1-7 | **DOMAINES TECHNIQUES RECHERCHES (Int. Cl.5)**<br><br>B32B |
| A | GB-A-1575801 (AUSTIN SOPARIL LTED.)<br>* page 2, lignes 103 - 107; revendications 1, 4 * | 1, 2, 7 | |

Le présent rapport a été établi pour toutes les revendications

| Lieu de la recherche | Date d'achèvement de la recherche | Examinateur |
|---|---|---|
| LA HAYE | 18 AVRIL 1991 | IBARROLA TORRES O. |

EPO FORM 1503 03.82 (P0402)